# EUROPÄISCHE PATENTSCHRIFT

(11) **EP 1 616 821 B1**
(45) Veröffentlichungstag und Bekanntmachung des Hinweises auf die Patenterteilung: **23.11.2011**
(21) Anmeldenummer: 05011825.6
(22) Anmeldetag: 01.06.2005
(51) Int. Cl.: B65G 27/08, B65G 27/30

(54) **Antriebseinheit für einen Vibrationswendelförderer**
Drive unit for a vibratory spiral conveyor
Unité d'entraînement pour un transporteur hélicoidal à vibrations

(30) Priorität: 15.07.2004 DE 102004034481
(43) Veröffentlichungstag der Anmeldung: 18.01.2006
(73) Patentinhaber: Afag Holding AG, 6052 Hergiswil (CH)
(72) Erfinder: Kumeth, Sigmund, 92280 Kastl (DE)
(74) Vertreter: Blaumeier, Jörg

(56) Entgegenhaltungen:
- AT-B- 360 906
- DE-A1- 3 600 334
- DE-A1- 4 138 956
- PATENT ABSTRACTS OF JAPAN Bd. 009, Nr. 007 (M-350), 12. Januar 1985 (1985-01-12) -& JP 59 158720 A (SHINKO DENKI KK), 8. September 1984 (1984-09-08)

## Beschreibung

Die Erfindung betrifft eine Antriebseinheit für einen Vibrationswendelförderer, bestehend aus einem Basisteil, mit dem über mehrere erste Blattfederelemente ein Gegenschwingteil und mit dem über mehrere zweite Blattfederelemente ein Befestigungsteil, das mit einem Topf bewegungszukoppeln ist, federnd verbunden sind, wobei das Gegenschwingteil und das Befestigungsteil über eine zwischen ihnen wirkende Antriebseinrichtung in eine gegenläufige oszillierende Drehschwingbewegung um eine mittige Drehachse bringbar sind.

Vibrationswendelförderer dienen zum Fördern und gegebenenfalls Orientieren von kleinen Bauteilen, die als ungeordnete Menge in den Fördertopf eingebracht sind. An der Innenfläche des Fördertopfes ist eine umlaufende Förderwendel vorgesehen, längs welcher die Kleinstbauteile während des Betriebes, bei dem der Topf mit hoher Frequenz vibriert, durch Mikrowürfe vorwärts bewegt werden. Ein Vibrationswendelförderer mit einer Antriebseinheit der in Rede stehenden Art ist beispielsweise aus EP 0 644 134 B1 bekannt. Die dort beschriebene Antriebseinheit weist ein Basisteil auf, über das sie und mit ihr der Vibrationswendelförderer an einem Maschinentisch oder Maschinengestell unter Zwischenschaltung von Gummipuffern befestigt wird. Mit dem Basisteil sind über entsprechende Blattfederelemente im Betrieb gegenläufig zueinander schwingende Teile verbunden, nämlich zum einen ein Gegenschwingteil, das über mehrere erste Blattfederelemente federnd mit dem Basisteil verbunden ist, zum anderen ein Befestigungsteil, das über mehrere zweite Blattfederelemente federnd mit dem Basisteil gekoppelt ist. Die gegenläufige Teilebewegung wird über eine zwischen ihnen wirkende Antriebseinrichtung, in der Regel eine elektromagnetische Antriebseinrichtung mit einem Magnetkern, der vornehmlich am Gegenschwingteil befestigt ist und einem Magnetanker, der am Befestigungsteil angeordnet ist, erwirkt.

Die Bewegungsmöglichkeit beider Teile relativ zueinander und relativ zur Basis wird wie beschrieben über die jeweiligen Blattfederelemente gewährleistet. Die Blattfederelemente sind bei Antriebseinheiten der in Rede stehenden Art um die mittige Drehachse verteilt angeordnet. Zwar kann durch diesen Aufbau eine beachtliche Dämpfung von in das Basisteil eingeleiteten und von diesem auf das Maschinengestell weitergegebenen Störschwingungen aufgrund des Schwingkräfteausgleichs durch die gegenläufig schwingenden Massen erreicht werden. Jedoch haben sich bei längerem Betrieb und damit einer Dauerbelastung der Blattfederelemente aufgrund der Federbeanspruchung Beschädigungen an den Blattfederelementen ergeben, bis hin zum Federbruch. Auch konnte häufig trotz gleichem Aufbau der Antriebseinheiten und der zusammengesetzten Vibrationswendelförderer kein einheitliches Gesamtschwingverhalten beobachtet werden, das heißt, es hat sich eine relativ große Streubreite im Schwingverhalten zwischen den einzelnen Geräten eingestellt, letztlich waren auch die Fördergeschwindigkeiten bei gleich aufgebauten Vibrationswendelförderern häufig unterschiedlich.

Ein Vibrationswendelförderer, der die Merkmale des Oberbegriffs des Anspruchs 1 zeigt, ist aus DE 41 38 956 A1 bekannt. Auch aus JP 59-158720 A ist ein Vibrationswendelförderer bekannt, bei dem zur Vibrationsbewegung vier Blattfederpakete vorgesehen sind, die um 90° versetzt zueinander angeordnet sind.

Der Erfindung liegt damit das Problem zugrunde, eine Antriebseinheit anzugeben, die demgegenüber verbessert ist und ein sicheres und homogenes Schwingverhalten zulässt.

Zur Lösung dieses Problems ist bei einer Antriebseinheit der erfindungsgemäßen Art vorgesehen, dass die radial gesehen randseitig am Gegenschwingteil und am Befestigungsteil angeordneten Blattfederelemente derart angeordnet sind, dass ihre senkrecht zur Längsachse stehende, ein Blattfederelement bezogen auf seine Länge im Wesentlichen in der Mitte schneidende und parallel zu den seitlichen Federoberflächen verlaufende Mittenquerachse im Wesentlichen radial zur Drehachse steht, wobei das Gegenschwingteil, dessen Höhe randseitig so bemessen ist, dass es sich randseitig im Wesentlichen bis in den Bereich des oberen Endes der Blattfederelemente erstreckt, zwischen dem Basisteil und dem Befestigungsteil angeordnet ist.

Die erfindungsgemäße Antriebseinheit zeichnet sich durch eine besondere Ausrichtung der Blattfederelemente bezogen auf die Drehachse aus. Diese sind nunmehr quasi sternförmig so angeordnet, dass ihre Mittenquerachse, die ein Blattfederelement bezogen auf seine Länge mittig schneidet und parallel zu den Seitenflächen verläuft, radial zur Drehachse verläuft beziehungsweise diese schneidet. Diese spezielle Anordnung der Federelemente führt zu einer wesentlich geringeren Biegung und zu einer wesentlich geringeren Torsion der einzelnen Blattfederelemente während der oszillierenden Drehschwingbewegung der mit ihnen gekoppelten Teile um die mittige Drehachse, als dies bei Antriebseinheiten im Stand der Technik der Fall ist. Denn dort sind die Blattfederelemente unsymmetrisch bezüglich der Drehachse angeordnet, das heißt, die Mittenquerachsen der Blattfederelemente verlaufen dort nicht radial zur Drehachse, sondern versetzt dazu. Infolge dieses Versatzes erfährt ein Blattfederelement während der oszillierenden Drehschwingbewegung eine hohe Biege- und Torsionsbelastung. Werden nun die Blattfederelemente erfindungsgemäß bezüglich der Drehachse ausgerichtet, können die Biege- und Torsionsbelastungen wie beschrieben deutlich reduziert werden. Auch lässt sich ein relativ definiertes Federverhalten einstellen, da die Gesamtfederbeanspruchung weit weniger komplex ist als bei unsymmetrisch angeordneten Blattfederelementen. Schließlich zeigen auch verschiedene, gleich aufgebaute Antriebseinheiten beziehungsweise Vibrationswendelförderer kaum Differenzen in Schwingverhalten und damit der Fördergeschwindigkeit, das heißt, die Toleranzbreite bei gleich aufgebauten Geräten kann verringert werden. Weiterhin wird durch die erfindungsgemäße Federanordnung auch eine wesentliche Erhöhung der Lebensdauer der Blattfederelemente und daraus resultierend eine Verbesserung der Betriebssicherheit wie auch eine Verlängerung der Betriebsdauer des Antriebs erreicht.

Je nach geforderter Leistung der Antriebseinheit können die Federeigenschaften eines Blattfederelements unterschiedlich auszulegen sein. Zweckmäßigerweise wird ein Blattfederelement als Blattfederpaket bestehend aus mehreren parallel zueinander stehenden einzelnen Federn oder Federpaketen aufgebaut, wobei die radial ausgerichtete Mittenquerachse das Blattfederpaket im Wesentlichen mittig bezogen seine Breite schneidet. Die Blattfederelemente sind dabei bevorzugt um ihre Mittenquerachse gedreht und damit zur Drehachse geneigt angeordnet, das heißt, ihre aufgespannte Blattebene ist zur Drehachse gekippt beziehungsweise verneigt.

Alle Blattfederelemente sollten die gleiche Länge aufweisen und in der gleichen Ebene angeordnet sein, das heißt, ihre Enden liegen alle gleich hoch beziehungsweise in der gleichen Horizontalebene.

Um die Antriebseinheit möglichst kompakt auszuführen, ist es zweckmäßig, wenn das Gegenschwingteil zwischen dem Basisteil und dem Befestigungsteil angeordnet ist, beide könnten plattenförmig ausgebildet sein, wobei der Begriff "plattenförmig" so zu verstehen ist, dass sie eine größerflächige Form aufweisen, die jedoch nicht geschlossen sein muss, vielmehr kann beispielsweise das Befestigungsteil auch sternförmig ausgebildet sein oder dergleichen, insbesondere, um Teile der Antriebseinrichtung montieren zu können. Zur weiteren Kompaktierung ist es zweckmäßig, wenn das Gegenschwingteil und das Befestigungsteil ineinanderliegend oder ineinandergreifend angeordnet sind.

Die Antriebseinrichtung ist zweckmäßigerweise eine elektromagnetische Antriebseinrichtung umfassend mehrere Antriebsmodule, von denen je ein erstes Antriebsteil am Gegenschwingteil und ein mit diesem zusammenwirkendes zweites Antriebsteil am Befestigungsteil angeordnet ist. Das erste Antriebsteil ist zweckmäßigerweise der Elektromagnet, der am Gegenschwingteil angeordnet ist, während das zweite Antriebsteil in Form des Ankers am Befestigungsteil positioniert ist. Die Antriebsmodule sind symmetrisch zueinander um die Drehachse versetzt angeordnet.

Daneben betrifft die Erfindung einen Vibrationswendelförderer umfassend eine Antriebseinheit der beschriebenen Art.

Weiter Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Perspektivdarstellung eines erfindungsgemäßen Vibrationswendelförderers umfassend eine erfindungsgemäße Antriebseinheit,
- Fig. 2: eine Perspektivdarstellung der Antriebseinheit aus Fig. 1, teilweise im Schnitt,
- Fig. 3: das Antriebsteil aus Fig. 2, in einer Schnittdarstellung durch das Gegenschwingteil,
- Fig. 4: eine Prinzipdarstellung einer Aufsicht auf die Antriebseinheit zur Darstellung der Ausrichtung der Blattfederelemente.

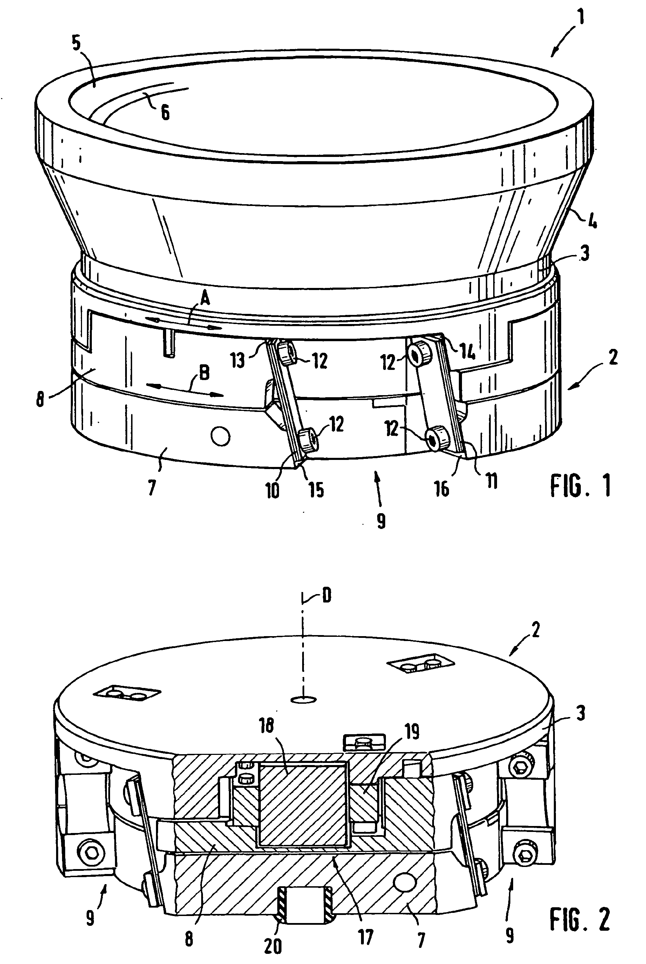

Fig. 1 zeigt einen erfindungsgemäßen Vibrationswendelförderer 1, umfassend eine erfindungsgemäße Antriebseinheit 2 mit einem Befestigungsteil 3, an dem ein Topf 4, an dessen Innenseite 5 eine umlaufende Förderwendel 6 ausgebildet ist, befestigt ist. Im Topf 4 sind im Einsatz kleine Bauteile eingebracht, die durch den Vibrationsbetrieb längs der sich vom Boden nach oben zu einer Abgabeposition schraubende Förderwendel 6 bewegt werden. An der Übergabestelle werden sie beispielsweise an einen Fertigungs- oder Montageautomaten abgegeben. Der Topf 4 ist bevorzugt lösbar, kann also gegen einen anderen Topf ausgetauscht werden.

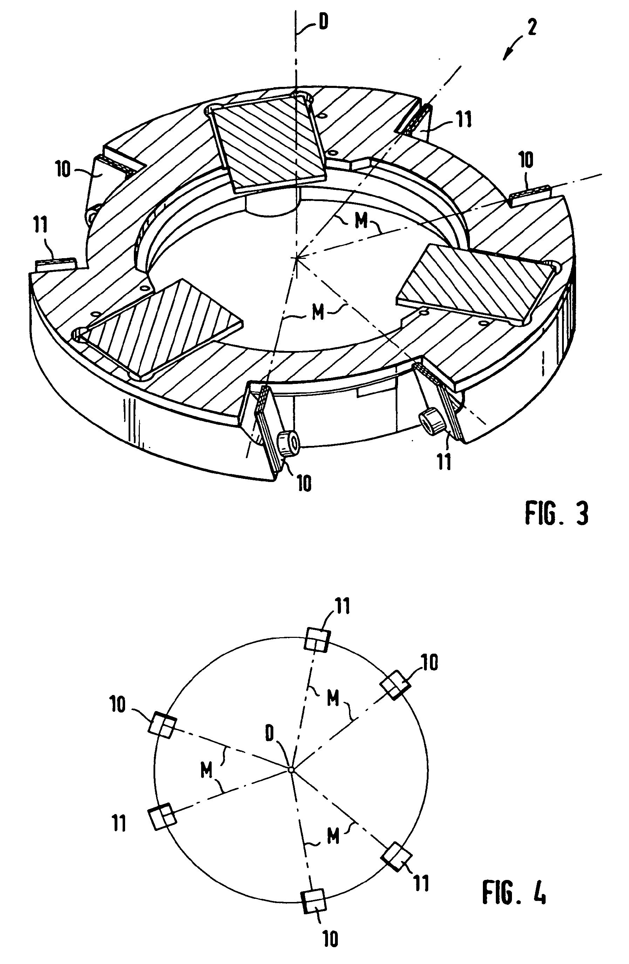

Fig. 2 zeigt im Detail die erfindungsgemäße Antriebseinheit 2. Diese weist zusätzlich zum Befestigungsteil 3, das hier plattenförmig und oberseitig geschlossen ist, ein Basisteil 7 sowie ein Gegenschwingteil 8 auf. Das Basisteil 7 wie auch das Gegenschwingteil 8 sind hier, siehe insbesondere Fig. 3, ringförmig aufgebaut. Über das Basisteil 7 kann die Antriebseinheit 2 und mit ihr der gesamte Vibrationswendelförderer 1, beispielsweise über Gummipuffer 20 mit dem Maschinengestell einer Fertigungs- oder Montageeinheit verbunden werden. Nach oben hin wird wie beschrieben der Aufbau mit dem unteren Basisteil 7, dem mittigen Gegenschwingteil 8 und dem oberen Befestigungsteil 3 über letzteres abgeschlossen. Die drei Bauteile sind axial in Richtung der Drehachse D etwas zueinander versetzt beziehungsweise beabstandet angeordnet, so dass im Betrieb Relativbewegungen des Gegenschwingteils 8 und des Befestigungsteils 3 zueinander und bezüglich des feststehenden Basisteils möglich sind. Beide vollführen eine oszillierende Drehschwingbewegung um die Drehachse D, wie durch die beiden Doppelpfeile A und B dargestellt. Aufgrund der Verbindung des Topfes 4 mit dem Befestigungsteil 3 vollzieht auch der Topf 4 die entsprechende Bewegung.

Im gezeigten Beispiel sind am Basisteil 7, am Gegenschwingteil 8 sowie am Befestigungsteil 3 durch entsprechende randseitige Ausgestaltung mindestens drei Ausnehmungen 9 ausgebildet, die symmetrisch um 120° um die Drehachse D versetzt sind. In diesen Ausnehmungen sind Blattfederelemente 10, 11 aufgenommen, über die das Gegenschwingteil 8 sowie das Montageteil 3 federnd mit dem Basisteil 7 verbunden sind. Im gezeigten Ausführungsbeispiel ist das Gegenschwingteil 8 über die im gezeigten Beispiel insgesamt drei ersten Blattfederelemente 10, die jeweils als Blattfederpaket aus mehreren Einzelfedern ausgebildet sind, mit dem Basisteil 7 verbunden. Entsprechend ist das Befestigungsteil 3 über die drei zweite Blattfederelemente 11, ebenfalls als Blattfederpakete und bevorzugt identisch zu den Blattfederelementen 10 ausgeführt, mit dem Basisteil 7 verbunden. Die jeweiligen Blattfederelemente 10, 11 sind ebenfalls symmetrisch um die Drehachse D zueinander versetzt angeordnet. Über geeignete Befestigungsmittel 12 sind die Blattfederelemente 10, 11 mit ihren jeweiligen Enden mit dem entsprechenden Teil verschraubt. Ersichtlich liegen dabei das Befestigungsteil 3 und das Gegenschwingteil 8 ineinander beziehungsweise greifen ineinander, so dass im Bereich der Ausnehmung 9 entsprechende Befestigungsabschnitte für das jeweilige obere Ende eines Blattfederelements 10, 11 am Gegenschwingteil 8 beziehungsweise am Befestigungsteil 3 ausgebildet sind. Die Befestigungsfläche am Gegenschwingteil ist im gezeigten Beispiel mit 13, die am Befestigungsteil mit 14 bezeichnet. Entsprechende Befestigungsflächen 15, 16 sind am Basisteil 7 vorgesehen.

Wie die Figuren 1 und 2 zeigen, sind die Blattfederelemente 10, 11 bezüglich der Vertikalen und damit der Drehachse D etwas geneigt angeordnet, das heißt, sie stehen nicht senkrecht, sondern unter einem leichten Neigungswinkel. Die Ausrichtung der einzelnen Blattfederelemente bezüglich der Drehachse D ergibt sich des Weiteren aus Fig. 3. In dieser ist eine Schnittansicht der Antriebseinheit 2 gezeigt, wobei der Schnitt durch das Gegenschwingteil in der Horizontalebene geführt ist, die die Blattfederelemente bezogen auf ihre Länge in der Mitte schneidet. Die Blattfederelemente 10, 11 sind alle in der gleichen Höhe angeordnet, das heißt, ihre oberen und unteren Enden liegen in der jeweils gleichen Horizontalebene. Die Blattfederelemente 10, 11 sind nun aufgrund der Ausrichtung der jeweiligen Befestigungsflächen 13, 15 beziehungsweise 14, 16 derart bezüglich der Drehachse D ausgerichtet, dass ihre Mittenquerachse M, wie in Fig. 3 gezeigt, radial zur Drehachse D läuft und diese schneidet. Die Mittenquerachse M verläuft bezogen auf die Länge der Blattfederelemente 10, 11 in der Federelementmitte. Entsprechend verläuft sie bezogen auf die Breite der Blattfederelemente 10, 11, die aus mehreren Einzelfedern bestehen, ebenfalls mittig. Das heißt, sie verläuft also sowohl in Längs- wie auch in Breitenrichtung durch die Federelementmitte und liegt parallel zu den jeweiligen Seitenflächen eines Blattfederelements. Aufgrund der höhenmäßig gleichen Anordnung der Blattfederelemente liegen folglich auch alle Mittenquerachsen M der einzelnen Blattfederelemente 10, 11 in der gleichen Horizontalebene, durch die der Schnitt gemäß Fig. 3 gelegt ist.

Aufgrund der über eine noch zu beschreibende Antriebseinrichtung erwirkten oszillierenden Drehschwingbewegung des Gegenschwingteils 8 und des Befestigungsteil 3 zueinander um die Drehachse D erfahren die Blattfederelemente 10, 11 eine Biegebeanspruchung wie auch eine Torsionsbeanspruchung aufgrund der Drehbewegung, nachdem die Enden der Blattfederelemente 10, 11 bezüglich des Basisteils 7 festliegen und unbewegt sind, während ihre oberen Enden bewegt werden. Aufgrund der Ausrichtung der Blattfederelemente 10, 11 mit ihren radial zur Drehachse D liegenden und diese schneidenden Mittenquerachsen M sind diese Biege- und Torsionsbeanspruchungen beziehungsweise die wirkenden Kräfte jedoch sehr gering, weshalb Beschädigungen der Federelemente auch im Dauerbetrieb ausgeschlossen sind.

Zur Erzeugung der oszillierenden Drehschwingbewegung ist eine Antriebseinrichtung umfassend drei Antriebsmodule 17 vorgesehen, die ebenfalls in gleichen Winkelabständen um die Drehachse D verteilt angeordnet sind, wobei ein Antriebsmodul jeweils in der Mitte zwischen zwei Ausnehmungen 9 angeordnet ist. Jedes Antriebsmodul 17, das zwischen dem Gegenschwingteil 8 und dem Befestigungsteil 3 wirkt, umfasst eine Magnetspule oder einen Elektromagneten 18, der im gezeigten Beispiel mit dem Gegenschwingteil 8 verbunden ist und mit diesem schwingt. Ferner umfasst jedes Antriebsmodul 17 einen Magnetanker 19, der im gezeigten Beispiel mit dem Befestigungsteil 3 verbunden ist und mit diesem schwingt. Der Elektromagnet 18 wie auch der Magnetanker 19 sind in entsprechenden Aufnahmeabschnitten am jeweiligen Teil aufgenommen. Der Betrieb der Antriebseinrichtung erfolgt bevorzugt über die übliche Netzspannung, also die übliche Wechselspannung, es ist aber auch ein Impulsspannungsbetrieb möglich. Wird nun die Antriebseinrichtung betätigt, so werden aufgrund der wirkenden elektromagnetischen Kräfte das Gegenschwingteil 8 und das Befestigungsteil 3 oszillierend gegenläufig zueinander bewegt, sie führen eine Drehschwingbewegung um die Drehachse D aus. Die Bewegungskopplung bezüglich des feststehenden Basisteils 7 erfolgt über die Blattfederelemente 10, 11. Während der gegenläufigen oszillierenden Bewegung werden die Blattfederelemente 10, 11 um ihren unteren und oberen Befestigungspunkt gebogen und minimal tordiert. Zusätzlich zu der resultierenden gegenläufigen Schwingbewegung des Befestigungsteils 3 mit dem Topf 4 und des Gegenschwingteils 8 um die Drehachse D erfolgt infolge der Schrägstellung der Blattfederelemente 10, 11 gegenüber der Horizontalebene auch ein gegenläufiges periodisches Anheben und Absenken des Befestigungsteils 3 und des Gegenschwingteils 8 in der Vertikalen relativ zum Basisteil 7, jedoch mit nur geringer Amplitude.

Sämtliche Blattfederelemente 10, 11 sind identisch. Es wird also jeweils die gleiche Anzahl an Einzelfedern mit den gleichen Federeigenschaften verwendet. Infolgedessen ist auch die jeweilige Federkonstante der einzelnen Blattfederelemente 10, 11 für die jeweils mit ihnen verbundene Masse (im Falle der Blattfederelemente 10 die Gegenmasse, gebildet im Wesentlichen aus dem Gegenschwingteil 8 und dem Elektromagneten 18 nebst Befestigungselementen, im Falle der Nutzmasse im Wesentlichen des Befestigungsteils 3, des Magnetankers 19 und des Topfes 4 nebst Befestigungselementen) gleich, es kann somit für beide Massen auch die selbe Eigen- beziehungsweise Resonanzfrequenz erreicht werden, und zwar sowohl betreffend die oszillierende Drehschwingbewegung um die Drehachse D als auch die oszillierende Hubbewegung in Richtung der Vertikalachse, also der Drehachse D. In diesem Zusammenhang sind zweckmäßigerweise die Nutzmasse und die Gegenmasse so ausgeführt, dass außerdem die Eigen- oder Resonanzfrequenz für die oszillierende Drehschwingbewegung um die Drehachse D und die Eigen- oder Resonanzfrequenz für die vertikale Hubbewegung annährend gleich sind. Betrieben wird die Antriebseinrichtung bevorzugt mit einer Frequenz, die annähernd der Eigen- oder Resonanzfrequenz entspricht, wobei ein unterkritischer Betrieb mit einer unterhalb der Eigenfrequenz liegenden Betriebsfrequenz anzustreben ist.

Wie beschrieben kann durch die erfindungsgemäße Anordnung der Blattfederelemente 10, 11 bezüglich der Drehachse D die Beanspruchung der Blattfederelemente minimiert werden, das heißt, im Vergleich zur bisherigen Anordnung wird die Biegebeanspruchung deutlich reduziert, die Torsion ist vernachlässigbar. Hierdurch ergeben sich definierte Schwingungsverhältnisse, die auch über verschiedene Antriebseinheiten und damit fertig zusammengebaute Vibrationswendelförderer vernachlässigbar variieren. Beeinträchtigungen der Federeigenschaften beziehungsweise Überlastungen und Brüche werden vermieden. Im Übrigen wird die Verwendung identisch ausgebildeter Einzelfedern ermöglicht, wie auch identisch ausgebildeter Blattfederelemente selbst, was die Herstellung und Lagerhaltung, insbesondere auch die Bereitstellung von Ersatzteilen vereinfacht.

Der erfindungsgemäße Aufbau der Antriebseinheit ermöglicht es, quasi standardisierte Antriebseinheiten unterschiedlicher Leistung und für unterschiedliche Einsatzgebiete zu konzipieren, so dass dem Anwender ein Auswahl-System mit mehreren unterschiedlichen Antriebsteilen zur Verfügung steht, wobei insbesondere die Lösbarkeit und Austauschbarkeit des Topfes es ermöglicht, unter Berücksichtigung der gegebenen Anforderungen an die Nutzmasse Töpfe auszutauschen, die einer bestimmten Antriebseinheit zugeordnet sind, welche Töpfe entsprechend den jeweiligen Erfordernissen von Haus aus ausgelegt sind.

## Patentansprüche

1. Antriebseinheit für einen Vibrationswendelförderer, bestehend aus einem Basisteil, mit dem über mehrere erste Blattfederelemente ein Gegenschwingteil und mit dem über mehrere zweite Blattfederelemente ein Befestigungsteil, das mit einem Topf bewegungszukoppeln ist, federnd verbunden sind, wobei das Gegenschwingteil und das Befestigungsteil über eine zwischen ihnen wirkende Antriebseinrichtung in eine gegenläufige oszillierende Drehschwingbewegung um eine mittige Drehachse bringbar sind, **dadurch gekennzeichnet, dass** die radial gesehen randseitig am Gegenschwingteil (8) und am Befestigungsteil (3) angeordneten Blattfederelemente (10, 11) derart angeordnet sind, dass ihre senkrecht zur Längsachse stehende, ein Blattfederelement (10, 11) bezogen auf seine Länge im Wesentlichen in der Mitte schneidende und parallel zu den seitlichen Federoberflächen verlaufende Mittenquerachse (M) im Wesentlichen radial zur Drehachse (D) steht, wobei das Gegenschwingteil (8), dessen Höhe randseitig so bemessen ist, dass es sich randseitig im Wesentlichen bis in den Bereich des oberen Endes der Blattfederelemente erstreckt, zwischen dem Basisteil (7) und dem Befestigungsteil (3) angeordnet ist.

2. Antriebseinheit nach Anspruch 1, **dadurch gekennzeichnet, dass** ein Blattfederelement (10, 11) als Blattfederpaket bestehend aus mehreren parallel zueinander stehenden einzelnen Federn oder Federpaketen ist, wobei die radial ausgerichtete Mittenquerachse (M) das Blattfederpaket im Wesentlichen mittig bezogen auf seine Breite schneidet.

3. Antriebseinheit nach Anspruch 1 oder 2, **dadurch gekennzeichnet, dass** die Blattfederelemente (10, 11) um ihre Mittenquerachse (M) gedreht und damit zur Drehachse (D) geneigt angeordnet sind.

4. Antriebseinheit nach einem der vorangehenden Ansprüche, **dadurch gekennzeichnet, dass** alle Blattfederelemente (10,11) die gleiche Länge aufweisen und in der gleichen Ebene angeordnet sind.

5. Antriebseinheit nach einem der vorangehenden Ansprüche, **dadurch gekennzeichnet, dass** das Gegenschwingteil (8) und das Befestigungsteil (3) plattenförmig, ringförmig oder sternförmig ausgebildet sind.

6. Antriebseinheit nach einem der vorangehenden Ansprüche, **dadurch gekennzeichnet, dass** das Gegenschwingteil (8) und das Befestigungsteil (3) ineinanderliegend oder ineinandergreifend angeordnet sind.

7. Antriebseinheit nach einem der vorangehenden Ansprüche, **dadurch gekennzeichnet, dass** die Antriebseinrichtung eine elektromagnetische Antriebseinrichtung ist umfassend mehrere Antriebsmodule (17), von denen je ein erstes Antriebsteil (18) am Gegenschwingteil (8) und ein mit diesem zusammenwirkendes zweites Antriebsteil (19) am Befestigungsteil 83) angeordnet ist.

8. Vibrationswendelförderer (1) umfassend eine Antriebseinheit (2) nach einem der vorangehenden Ansprüche.

## Claims

1. A drive unit for a vibratory spiral feeder, comprising a base part, to which a counter-oscillating part is connected in an elastic manner via several first leaf-spring elements, and to which a mounting part, which is to be coupled to a hopper for movement, is connected in an elastic manner via several second leaf-spring elements, wherein the counter-oscillating part and the mounting part can be brought, via a drive device acting between them, into a contrary, oscillating, rotary motion around a central rotational axis
**characterised in that**
the leaf-spring elements, which are disposed from a radial perspective at the edge of the counter-oscillating part (8), and the mounting part (3) are arranged in such a manner that
their middle transverse axis (M), standing perpendicular to the longitudinal axis, intersecting one leaf-spring element (10, 11) substantially in the middle relative to its length and running parallel to the lateral spring surfaces, is disposed substantially radially to the rotational axis (D),
wherein the counter-oscillating part (8), of which the height is dimensioned at the edge in such a manner that it extends at the edge substantially into the region of the upper end of the leaf-spring elements, is arranged between the base part (7) and the mounting part (3).

2. The drive unit according to claim 1,
**characterised in that**
one leaf-spring element (10, 11) is a leaf-spring set comprising several individual springs or spring sets which are arranged parallel to each other, wherein the radially orientated, middle transverse axis (M) substantially intersects the leaf spring set in the middle relative to its width.

3. The drive unit according to claims 1 or 2,
**characterised in that**
the leaf-spring elements (10, 11) are arranged rotated around their middle transverse axis (M) and accordingly inclined relative to the rotational axis (D).

4. The drive unit according to one of the preceding claims,
**characterised in that**
all leaf-spring elements (10, 11) provide the same length and are arranged in the same plane.

5. The drive unit according to one of the preceding claims,
**characterised in that**
the counter-oscillating part (8) and the mounting part (3) are plate-shaped, ring-shaped or star-shaped.

6. The drive unit according to one of the preceding claims,
**characterised in that**
the counter-oscillating part (8) and the mounting part (3) are arranged in a concentric or interlocking manner.

7. The drive unit according to one of the preceding claims,
**characterised in that**
the drive device is an electromagnetic drive device containing several drive modules (17), from each of which a first drive part (18) is arranged on the counter-oscillating part (8), and a second drive part (19) cooperating with these is arranged on the mounting part 83)[?].

8. A vibratory spiral feeder (1) comprising a drive unit (2) according to one of the preceding claims.

## Revendications

1. Unité d'entraînement pour un transporteur hélicoïdal à vibrations, comprenant une partie de base, avec laquelle une partie opposée oscillante est reliée de façon élastique au moyen de plusieurs premiers éléments de ressort à lame, et avec laquelle une partie de fixation, qui doit être couplée pour mouvement avec un pot, est reliée de façon élastique au moyen de plusieurs seconds éléments de ressort à lame, la partie opposée vibrante et la partie de fixation pouvant être amenées au moyen d'un dispositif d'entraînement agissant entre elles dans un mouvement de rotation et vibration oscillant et contraire autour d'un axe de rotation central, **caractérisée en ce que** les éléments de ressort à lame (10, 11) disposés côté bord vu radialement sur la partie opposée oscillante (8) et sur la partie de fixation (3), sont disposés de telle sorte que leur axe transversal central (M), perpendiculaire à l'axe longitudinal, coupant un élément de ressort à lame (10, 11) sensiblement au centre par rapport à sa longueur et agencé parallèlement aux surfaces de ressort latérales est situé sensiblement radialement par rapport à l'axe de rotation (D), la partie opposée vibrante (8), dont la hauteur est dimensionnée côté bord de telle sorte qu'elle s'étend côté bord sensiblement jusque dans la zone de l'extrémité supérieure des éléments de ressort à lame, est disposée entre la partie de base (7) et la partie de fixation (3).

2. Unité d'entraînement selon la revendication 1, **caractérisée en ce que** l'élément de ressort à lame (10, 11) sous forme de bloc-ressort à lame est constitué de plusieurs ressorts ou blocs-ressorts individuels, parallèles entre eux, l'axe transversal médian (M) orienté radialement coupant le bloc-ressort à lame sensiblement au milieu par rapport à sa largeur.

3. Unité d'entraînement selon la revendication 1 ou 2, **caractérisée en ce que** les éléments de ressort à lame (10, 11) sont tournés autour de leur axe transversal médian (M) et sont disposés de façon inclinée par rapport à l'axe de rotation (D).

4. Unité d'entraînement selon l'une des revendications précédentes, **caractérisée en ce que** tous les éléments de ressort à lame (10, 11) présentent la même longueur et sont disposés dans le même plan.

5. Unité d'entraînement selon l'une des revendications précédentes, **caractérisée en ce que** la partie opposée oscillante (8) et la partie de fixation (3) sont conçues en forme de plaque, d'anneau ou d'étoile.

6. Unité d'entraînement selon l'une des revendications précédentes, **caractérisée en ce que** la partie opposée oscillante (8) et la partie de fixation (3) sont disposées de façon couchée l'une dans l'autre ou imbriquée l'une dans l'autre.

7. Unité d'entraînement selon l'une des revendications précédentes, **caractérisée en ce que** le dispositif d'entraînement est un dispositif d'entraînement électromagnétique comprenant plusieurs modules d'entraînement (17), sur chacun desquels une première partie d'entraînement (18) est disposée sur la partie opposée oscillante (8) et une seconde partie d'entraînement (19), coopérant avec cette partie, est disposée sur la partie de fixation (83).

8. Transporteur hélicoïdale à vibrations (1) comprenant une unité d'entraînement (2) selon l'une des revendications précédentes.
